# EUROPEAN PATENT APPLICATION

(11) **EP 3 001 688 A1**
(43) Date of publication of application: **30.03.2016**
(21) Application number: 14306487.1
(22) Date of filing: 26.09.2014
(51) Int. Cl.: H04N 21/235, H04N 21/238, H04N 21/442, H04L 29/06

(54) **System and method for transferring adaptive streaming video between a server and a client**

(71) Applicant: ALCATEL LUCENT, 92100 Boulogne-Billancourt (FR)
(72) Inventor: Huysegems, Rafael, 2018 Antwerpen (BE); De Vleeschauwer, Bart, 2018 Antwerpen (BE); Verzijp, Nico, 2018 Antwerpen (BE); Van Broeck, Sigurd, 2018 Antwerpen (BE)
(74) Representative: D'Halleweyn, Nele Veerle Trees Gertrudis

(57) **Abstract**

A system for transferring adaptive streaming video, comprising a plurality of segments, over an internet application protocol between a server and a client, said system comprising:
at the server: a manifest pushing unit configured for pushing a manifest, comprising information on at least availability of at least one segment of the plurality of segments, to the client when said manifest becomes available at the server;
at the client: a manifest parsing unit configured for parsing said manifest and determining which at least one segment is available;
at the client: a segment requesting unit configured for requesting said at least one available segment from the server;
at the server: a segment sending unit configured for sending said at least one available segment to the client;
at the client: a segment receiving unit configured for receiving said at least one available segment from the server.

## Description

### Field of Invention

Embodiments of the invention relate to the field of transferring adaptive streaming video and in particular to systems and methods for transferring adaptive streaming video between a server and a client over an internet application protocol.

### Background

HTTP adaptive streaming (HAS) is rapidly becoming the most popular method for video streaming, especially in over the top (OTT) video delivery deployments such as YouTube, NetFlix, etc.. Other well known HAS flavors are Smooth Streaming (Microsoft), HTTP Live Streaming (Apple) and Dynamic Adaptive Streaming over HTTP (MPEG-DASH). HAS is able to adapt the video quality to the bandwidth (BW) conditions in the network in order to avoid video re-buffering leading to a freeze of the video.

HAS streaming however has its limitations such as a large camera-to-display delay, low bandwidth (BW) utilization and a sub-optimal selection of the quality levels. As a result, the Quality of Experience (QoE) of the viewer is often not optimal.

### Summary

The object of embodiments of the invention is to provide a system and a method for transferring adaptive streaming video between a server and a client over an internet application protocol, which provide a good QoE to the viewer, while reducing the camera-to-display delay.

According to a first aspect of the invention there is provided a system for transferring adaptive streaming video, comprising a plurality of segments, over an internet application protocol between a server and a client. The system comprises:
at the server: a manifest pushing unit configured for pushing a manifest, comprising information on at least availability of at least one segment of the plurality of segments, to the client when the manifest becomes available at the server;
at the client: a manifest receiving unit for receiving the manifest from the server;
at the client: a manifest parsing unit for parsing the manifest and determining which at least one segment is available;
at the client: a segment requesting unit configured for requesting the at least one available segment from the server;
at the server: a request receiving unit configured for receiving from the client the request for the at least one available segment;
at the server: a segment sending unit configured for sending the at least one available segment to the client;
at the client: a segment receiving unit configured for receiving the at least one available segment from the server.

In prior art systems, clients use a periodic timer to prompt for manifests at regular intervals. However, manifests often become available at the server during these regular intervals, which causes a waiting time to be introduced, which passes between the moment a manifest becomes available at the server, and the moment the client requests the manifest. Such a manifest is needed by the client to be informed of a new available segment of the video, and for each following segment, the client needs a new manifest. Therefore, waiting time is introduced in every cycle by requesting a manifest. In addition to the waiting time, one should also consider the round trip time (RTT) for a manifest, which is the time between the client requesting the manifest and actually receiving the manifest. As with the waiting time, this RTT is introduced in every cycle by requesting a manifest.

Embodiments of the invention are based *inter alia* on the insight that by making the server push the manifests when they become available, instead of the client having to request them regular intervals, a lot of time is saved per cycle. Indeed, by automatically pushing a manifest to the client when it becomes available at the server, the waiting time at the client is diminished or even totally abolished, as compared to prior art systems. Additionally, since no request needs to be sent by the client, also the RTT's are severely reduced or entirely absent. These features reduce the camera-to-display delay drastically and in the further course of the text it will become apparent how these features further enhance the QoE of the viewer.

According to an embodiment, the system further comprises;
at the client: a manifest requesting unit configured for requesting a manifest from the server; and
at the server: a manifest sending unit for sending said manifest to the client upon request of the client.

The manifest requesting unit is preferably configured for requesting an initial manifest from the server for initiating adaptive streaming video transfer. Once the transfer has been initiated, the server can start pushing further manifests when they become available and there is no more need for the client to request any more manifests for that video transfer.

According to an embodiment the manifest comprises information on the quality of the at least one available segment and the system further comprises at the client a bandwidth determining unit and a segment selecting unit; and
at the client: the manifest parsing unit is configured for parsing said manifest and determining the quality of the at least one available segment;
at the client: the bandwidth determining unit is configured for determining an available bandwidth;
at the client: the selecting unit is configured for selecting which of the at least one available segment should be requested, based on the quality of said at least one available segment and the available bandwidth;
at the client: the segment requesting unit is configured for requesting said selected segment from the server;
at the server: the segment sending unit is configured for sending said selected segment to the client;
at the client: the segment receiving unit is configured for receiving said selected segment from the server.

Segments can be made available in different qualities. By determining the available bandwidth, a segment can be selected which is the best match for the available bandwidth. When there is more bandwidth available, better quality segments can be requested. In prior art systems, a lot of time is wasted, and thus cannot be used to transfer video data. As a result, relatively high quality segments cannot be downloaded because there is insufficient time in every request-response cycle to download them. Therefore the client will request a relatively low quality segment. Since in the proposed invention however, a lot of time is won by directly pushing the manifest when it is available, and the amount of wasted waiting time is significantly less, more bandwidth was used during the process and therefore a higher quality segment will be requested. Since the quality of the requested segments is higher, so is the quality of the video and the QoE of the viewer.

In an embodiment the bandwidth determining unit is configured for determining the available bandwidth by performing at least one step of the group comprising monitoring bandwidth utilization during a previous cycle, monitoring a perceived bandwidth for recently received segments and monitoring current buffer filling.

One cycle according to the invention comprises the server pushing a manifest to the client when the manifest is available, the client receiving the manifest, parsing it, requesting and receiving from the server a segment of the video. The bandwidth usage during such a cycle can be a criterion for determining how much bandwidth is at least available for downloading a segment.

In a preferred embodiment the internet application protocol is Hypertext Transfer Protocol.

According to a preferred embodiment of the invention, the internet application protocol is HTTP2.0 and the manifest pushing unit is configured for pushing a manifest to the client by performing a HTTP2.0 push.

By using HTTP to transport video segments, the video segments can traverse through firewalls without problems. In addition, existing HTTP infrastructure for web-surfing such as HTTP-servers and contend delivery networks (CDN) can be reused to deliver the content.

According to a further embodiment the system is implemented in a content delivery network (CDN).

The skilled person will understand that the hereinabove described technical considerations and advantages for system embodiments also apply to the method embodiments, *mutatis mutandis*.

According to a second aspect of the invention there is provided a method for transferring adaptive streaming video, comprising a plurality of segments, over an internet application protocol between a server and a client. The method comprises at least one cycle of following steps:
at the server: pushing a manifest, comprising information on at least availability of at least one segment of the plurality of segments, to the client when said manifest becomes available at the server;
at the client: receiving said manifest from the server;
at the client: parsing said manifest and determining which at least one segment is available;
at the client: requesting said at least one available segment from the server;
at the server: receiving from the client said request for said at least one available segment
at the server: sending said at least one available segment to the client;
at the client: receiving said at least one available segment from the server.

According to an embodiment the step at the server of pushing a manifest to the client when said manifest becomes available at the server, is ,in an initial cycle, replaced by following steps:
at the client: requesting a manifest from the server; and
at the server: sending said manifest to the client.

According to a further embodiment the manifest comprises information on the quality of the at least one available segment and the at least one cycle comprises following steps:
at the client: parsing said manifest and determining the quality of the at least one available segment;
at the client: determining an available bandwidth;
at the client: selecting which of the at least one available segment should be requested, based on the quality of said at least one available segment and the available bandwidth;
at the client: requesting said selected segment from the server;
at the server: sending said selected segment to the client;
at the client: receiving said selected segment from the server.

According to a preferred embodiment determining the available bandwidth comprises at least one step of the group comprising monitoring bandwidth utilization during a previous cycle, monitoring a perceived bandwidth for recently received segments and monitoring current buffer filling.

According to yet another aspect of the invention, there is provided a server for sending adaptive streaming video, comprising a plurality of segments, over an internet application protocol to a client. The server comprises:
a manifest pushing unit configured for pushing a manifest, comprising information on at least availability of at least one segment of the plurality of segments, to the client when said manifest becomes available at the server;
a request receiving unit configured for receiving from the client a request for said at least one available segment; and
a segment sending unit configured for sending said at least one available segment to the client.

According to an embodiment the server further comprises:
an initial request receiving unit configured for receiving an initial request for a manifest from the client, for initiating adaptive streaming video transfer; and
a manifest sending unit configured for sending said manifest to the client upon request of the client.

According to yet another aspect of the invention, there is provided a method for sending adaptive streaming video, comprising a plurality of segments, over an internet application protocol from a server to a client. The method comprises at the server side:
pushing a manifest, comprising information on at least availability of at least one segment of the plurality of segments, to the client when said manifest becomes available at the server;
receiving from the client a request for sending said at least one available segment; and
sending said at least one available segment to the client.

According to an embodiment the method comprises at the server side:
receiving an initial request for a manifest from the client, to initiate adaptive streaming video transfer; and
sending said manifest to the client upon request of the client.

According to another aspect of the invention, there is provided a computer program product comprising computer-executable instructions for performing the method of any one of the claims 7 to 10, when the program is run on a computer.

According to a further aspect of the invention, there is provided a computer program comprising computer-executable instructions to perform the method, when the program is run on a computer, according to any one of the steps of any one of the embodiments disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 is a flowchart illustrating an embodiment of an exemplary method for transferring adaptive streaming video, over an internet application protocol, between a server and a client;
Figure 2 illustrates the difference between prior art solutions and a solution according to embodiments of the invention;
Figure 3 is a schematic drawing of an exemplary embodiment of a system for transferring adaptive streaming video, over an internet application protocol between a server and a client;
Figure 4 schematically illustrates two exemplary embodiments of the invention;
Figure 5; schematically illustrates an exemplary embodiment of the invention wherein the system according to the invention is implemented in a CDN;
Figure 6 is a schematic drawing of a server according to an exemplary embodiment; and
Figure 7 is a flowchart illustrating an exemplary embodiment of an method for transferring adaptive streaming video, to be executed at the server side.

### Description of embodiments

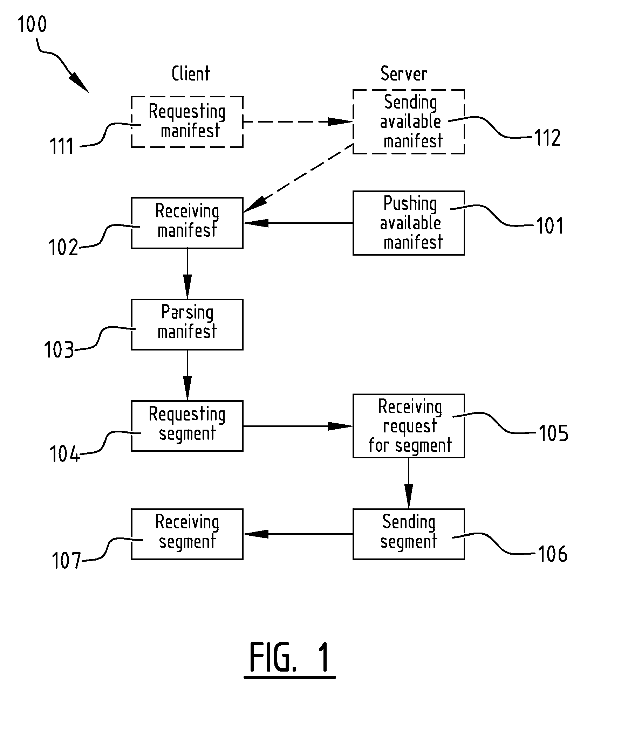

Figure 1 is a flowchart illustrating a method 100 for transferring adaptive streaming video, comprising a plurality of segments, over an internet application protocol between a server and a client. The method 100 comprises at least one cycle comprising:
at the server: a step 101 of pushing a manifest, comprising information on at least availability of at least one segment of the plurality of segments, to the client when said manifest becomes available at the server;
at the client: a step 102 of receiving said manifest from the server;
at the client: a step 103 of parsing said manifest and determining which at least one segment is available;
at the client: a step 104 of requesting said at least one available segment from the server;
at the server: a step 105 of receiving from the client said request for said at least one available segment
at the server: a step 106 sending said at least one available segment to the client;
at the client: a step 107 receiving said at least one available segment from the server.

Except for the steps discussed in the above paragraph, the method shown in figure 1 further comprises additional steps (illustrated with dotted lines) which are optional, and of which the functionality will be described below, with regards to further embodiments of the invention.

According to an embodiment step 101 at the server of pushing a manifest to the client when said manifest becomes available at the server, is ,in an initial cycle, replaced by following steps:
at the client: step 111 of requesting a manifest from the server; and
at the server: step 112 of sending said manifest to the client.

Step 111 is only executed during an initial cycle of the video transfer in order to initiate the video transfer. Once the transfer has been initiated, manifests will be automatically pushed when they become available and there is no more need for requesting any more manifests for that video transfer.

According to a further embodiment the manifest comprises information on the quality of the at least one available segment and the at least one cycle comprises following steps:
at the client: parsing said manifest and determining the quality of the at least one available segment;
at the client: determining an available bandwidth;
at the client: selecting which of the at least one available segment should be requested, based on the quality of said at least one available segment and the available bandwidth;
at the client: requesting said selected segment from the server;
at the server: sending said selected segment to the client;
at the client: receiving said selected segment from the server.

According to a preferred embodiment determining the available bandwidth comprises at least one step of the group comprising monitoring bandwidth utilization during a previous cycle, monitoring a perceived bandwidth for recently received segments and monitoring current buffer filling.

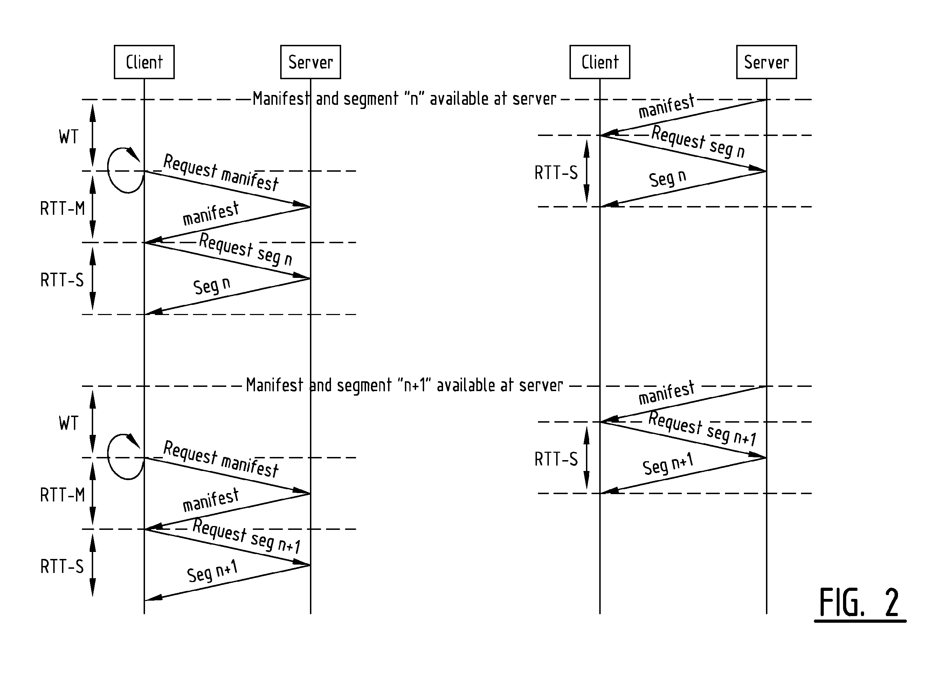

Figure 2 schematically illustrates the difference between prior art approaches (left) and the method according to an embodiment of the invention (right).

In HTTP Adaptive Streaming (HAS), the client adapts the video quality to optimally use the available bandwidth between the delivery point (server, proxy or content-delivery-node) and the client. This purpose is achieved using video chunks (also called segments) of typically 2 to 6 seconds, depending on the HAS flavor. These segments are coded in different qualities. Based on parameters such as perceived bandwidth for recently downloaded segments and current buffer filling, the Rate Determination Algorithm (RDA) in the client decides what quality-version will be used for the download of the next segment.

This approach allows for:
- The client to adapt the video quality to the available BW. This way, freezes (rebuffering) due to buffer-underrun can often be avoided.
- HAS to traverses trough firewalls without problems, because the video segments are transported using HTTP.
- The existing HTTP infrastructure for web-surfing such as HTTP-servers, HTTP-proxies and Content Delivery Networks (CDNs) to be reused to deliver HAS content.

However, figure 2 (left) shows a typical linear streaming client, receiving live or recorded content. When the client is in steady-state, the client has sufficient buffer filling and will try to download new manifests and new segments as soon as they appear at the server.

As shown on figure 2 (left side), a typical client does that in the following way :
1. The client uses a periodic timer.
2. At regular intervals, the periodic timer triggers the client to retrieve a new manifest file.
3. This implies that when a new manifest and segment become available at the server, the client will on average be waiting some amount of time before the periodic timer expires.

This time is indicated in the figure as waiting time (WT).
4. After the waiting time, the client requests the download of the manifest file. This will take at least one Round Trip Time (RTT) denoted as RTT-M.
5. The client receives the manifest file and concludes after parsing that a new segment has been made available.
6. The client requests the download of the new segment. This will take again at least one RTT denoted as RTT-S.
7. The new segment is received by the client and added to the buffer.

The disadvantage of this method is that there is a lot of wasted/idle time in every cycle:
- The waiting time due to the periodic timer. The average waiting time could be reduced by using a smaller period for the periodic timer. However, this will increase the load on the network and the server caused by the additional retrieval attempts.
- When the RTT is large, (e.g. for mobile networks) the total wasted time caused by the RTT-M and RTT-S will be large.

When the total wasted time (WT + RTT-M + RTT-S) is large, this has following implications for the QoE of the viewer:
- During the wasted time, the BW-utilization is (nearly) zero. As a result, the average BW-utilization during the session is low and the quality levels selected by the client are low compared to the quality levels that could have been reached with a higher BW-utilization.
- On top of this, the total wasted time is an important part of the total camera-to-display delay.

In 2012, the "Conviva viewer experience report" analyzed 22,6 billion video streams in 190 countries and came to the conclusion that roughly 60 % of all streams experience quality degradation and that 40 % was plagued by grainy or low-resolution picture quality.

The basic idea of this invention is to let the server use HTTP2.0 push to deliver the manifest file to the client as soon as the new manifest becomes available at the server. By doing so, the periodic waiting time (WT) and one RTT (RTT-M) can be saved every cycle, increasing the average BW utilization and the average quality of the segments. At the same time, also the camera-to-display delay is reduced.

The detailed flow is depicted in figure 2 (right) under "solution with manifest push":
1. A new manifest and new segment file become available at the server.
2. The server pushes the new manifest to the client.
3. The client receives the new manifest. After parsing, the client is aware that there is a new segment available at the server.
4. The client requests the new segment.
5. The client receives the segment and adds it to the playout buffer

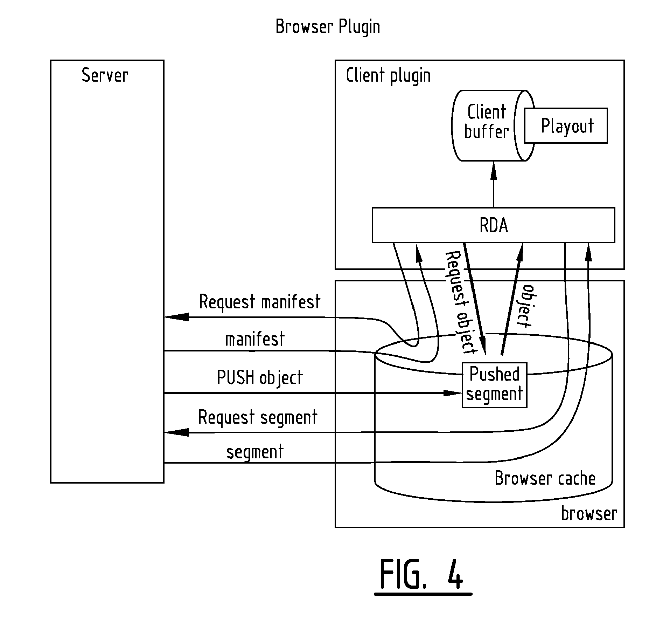

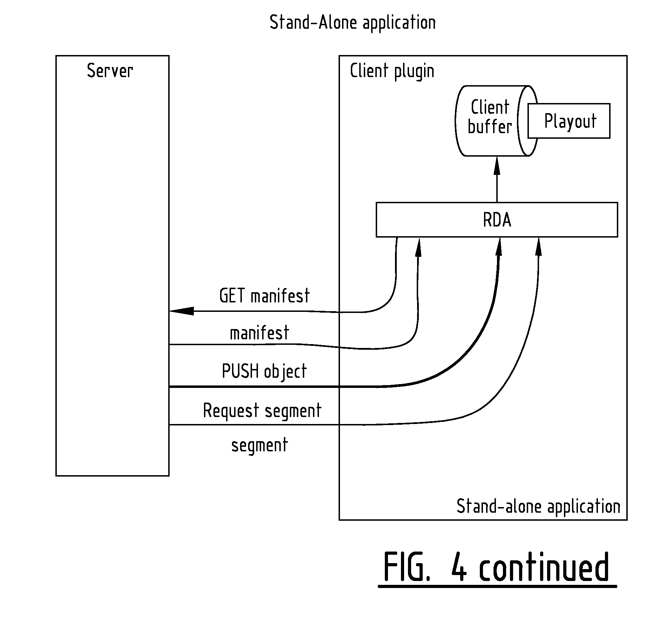

Compared to the prior art solution, and depending on the client architecture we gain :
- RTT-M in case of a HAS-client-plugin implementation where the push-notification towards plugins is missing in the API. (See figure 4.)
- WT + RTT-M in all other client implementations. (See figure 4 continued.)

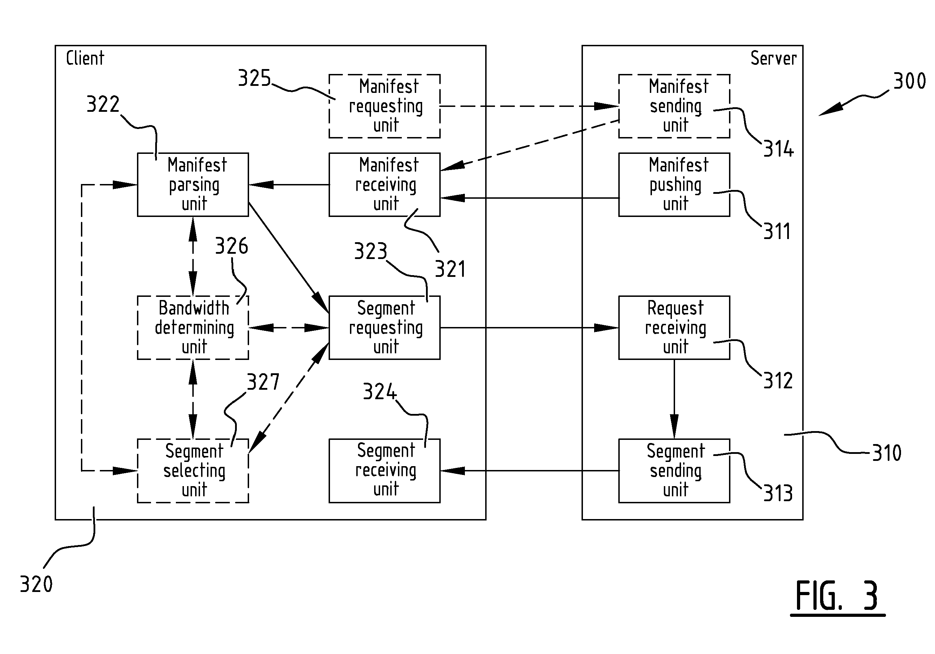

Figure 3 illustrates a system 300 for transferring adaptive streaming video, comprising a plurality of segments, over an internet application protocol between a server 310 and a client 320. The system 300 comprises:
at the server 310: a manifest pushing unit 311 configured for pushing a manifest, comprising information on at least availability of at least one segment of the plurality of segments, to the client 320 when the manifest becomes available at the server 310;
at the client 320: a manifest receiving unit 321 for receiving the manifest from the server 310;
at the client 320: a manifest parsing unit 322 for parsing the manifest and determining which at least one segment is available;
at the client 320: a segment requesting unit 323 configured for requesting the at least one available segment from the server 310;
at the server 310: a request receiving unit 312 configured for receiving from the client 320 the request for the at least one available segment;
at the server 310: a segment sending unit 313 configured for sending the at least one available segment to the client 320;
at the client 320: a segment receiving unit 324 configured for receiving the at least one available segment from the server.

Except for the units discussed in the above paragraph, the system shown in figure 3 further comprises additional units (illustrated with dotted lines) which are optional, and of which the functionality will be described below, with regards to further embodiments of the invention.

According to an embodiment, the system 300 further comprises;
at the client 320: a manifest requesting unit 325 configured for requesting a manifest from the server 310; and
at the server 310: a manifest sending unit 314 for sending said manifest to the client 320 upon request of the client 320.

The manifest requesting unit 325 is preferably configured for requesting an initial manifest from the server 310 for initiating adaptive streaming video transfer. Once the transfer has been initiated, the server 310 can start pushing further manifests when they become available and there is no more need for the client 320 to request any more manifests for that video transfer.

According to an embodiment the manifest comprises information on the quality of the at least one available segment and the system 300 further comprises at the client 320 a bandwidth determining unit 326 and a segment selecting unit 327; and
at the client 320: the manifest parsing unit 322 is configured for parsing said manifest and determining the quality of the at least one available segment;
at the client 320: the bandwidth determining unit 326 is configured for determining an available bandwidth;
at the client 320: the segment selecting unit 327 is configured for selecting which of the at least one available segment should be requested, based on the quality of said at least one available segment, the available bandwidth and the current buffer-filling level;
at the client 320: the segment requesting unit 323 is configured for requesting said selected segment from the server 310;
at the server: the segment sending unit is configured for sending said selected segment to the client 320;
at the client 320: the segment receiving unit 324 is configured for receiving said selected segment from the server 310.

The bandwidth determining unit 326 can for example use the segment-length (in bytes) and the transfer-time (in seconds) of previous segments to determine the estimated bandwidth. Afterwards the segment selection unit 327 selects which segment to request, based on the previous requested segment-seqnr, the actual buffer-filling (in seconds) and the perceived bandwidth.

In an embodiment the bandwidth determining unit 326 is configured for determining the available bandwidth by performing at least one step of the group comprising monitoring bandwidth utilization during a previous cycle, monitoring a perceived bandwidth for recently received segments and monitoring current buffer filling.

One cycle according to the invention comprises the server 310 pushing a manifest to the client 320 when the manifest is available, the client 320 receiving the manifest, parsing it, requesting and receiving from the server a segment of the video. The bandwidth usage during such a cycle can be a criterion for determining how much bandwidth is at least available for downloading a segment.

According to a preferred embodiment of the invention, the internet application protocol is HTTP2.0 and the manifest pushing unit is configured for pushing a manifest to the client 320 by performing a HTTP2.0 push.

By using HTTP to transport video segments, the video segments can traverse through firewalls without problems. In addition, existing HTTP infrastructure for web-surfing such as HTTP-servers and contend delivery networks (CDN) can be reused to deliver the content.

Figure 4 schematically illustrates embodiments of the invention wherein the system is applied in an architecture using a browser-plugin (top) or is implemented as an integrated stand-alone application (bottom).

In architectures using a browser-plugin as depicted on figure 4 (top), the HAS-client-plugin can only request manifests and segments via a well-defined software interface towards the browser. In some implementations, there is currently no function provided in this interface to notify the client-plugin that an object was pushed to the browser. The browser will just add the object to the browser cache. When the plugin would later request the pushed object, the browser serves the requested object immediately from the local cache. It is clear that in these architectures, the missing interface for pushed objects poses limitations to the implementation of the proposed push methods as described. However, it is expected that new means like "cache control using JavaScript" are likely to lift these limitations in future browsers. Additionally, it should be noted that the major browser vendors are dropping the NPAPI plug-in support. It can therefore be expected that HAS-client-plugins are likely to disappear.

When the client is implemented as an integrated stand-alone application as depicted in figure 4 (bottom), these limitations are of course not existing. The client/RDA can be informed directly when an object is pushed by the delivery node. Based on the knowledge that the object is available locally, the client can take the decision to reuse the already available segments. Furthermore, Video players in HTML5-compliant browsers support Media Source Extensions allowing JavaScript to generate streams that facilitate a variety of use cases such as adaptive streaming. For example, DASH.js implements the MPEG-DASH (Dynamic Adaptive Streaming over HTTP) technique in JavaScript. Using JavaScript, the proposed push methods as described can also easily be implemented.

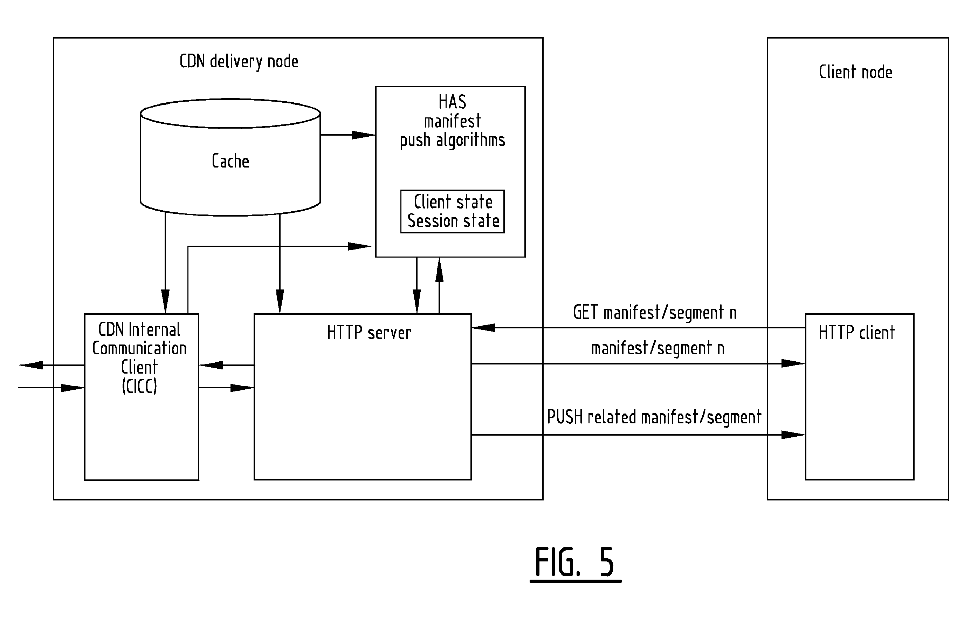

According to a further embodiment the system is implemented in a content delivery network (CDN) as illustrated in figure 5. The embodiment contains following functional blocks :
- HTTP-server: An HTTP-server component takes care of the HTTP communication with the clients. The HTTP-server receives HTTP GET requests from the clients. It performs a check to verify if the requested manifest/segment is already present in the cache. If present, it will provide the manifest/segment to the client. If not present, it will request the "CDN internal communication client" (CICC) to pull the segment/manifest from an upstream CDN node. When the object arrives at the node, the HTTP server will then provide it via HTTP to the client(s).
- CDN internal communication client (CICC): The CICC takes care of the CDN internal communication with the upstream CDN nodes. When the CICC receives a request for a manifest or segment from the HTTP-server (cache-miss), it will request the missing object from an upstream or neighbor CDN node. When the object is delivered, the CICC will trigger the HTTP server to start the actual transfer to the client(s).In some embodiments, the upstream CDN nodes can also push objects to the CICC (e.g. new segments and manifests for live streaming whenever they become available). In both cases (pull and push) the CICC inform the HMPA when a new manifest is received.
- HAS Manifest Push Algorithms (HMPA):The HMPA determines when manifest files must be pushed to certain clients. The HMPA is informed by the CICC when a manifest file for live streaming is received. It will then use one or more algorithms to decide to which clients the new manifest-file must be pushed and instructs the HTTP server to actually deliver the manifest via HTTP2.0 push.

To determine the "interested" clients for a manifest-file, the server could use one of following methods :
- The manifest is pushed to all clients that requested or received a segment of this channel during the last x seconds.
- The manifest is pushed to clients that performed an initial manifest download at the start of the session.
- The server uses the retrieval of the previous segment as a trigger to push a new manifest file as soon as it becomes available to the node.

For this, the HMPA collects and maintains channel- and/or session-state information to keep track of ongoing session and recent segment transfers.

In another embodiment, the HAS push algorithm is implemented on top of an HTTP proxy.

In another embodiment, the HAS push algorithm is implemented on top of an HTTP origin server.

In another embodiment, the HAS push algorithm is implemented on top of an wireless base-station.

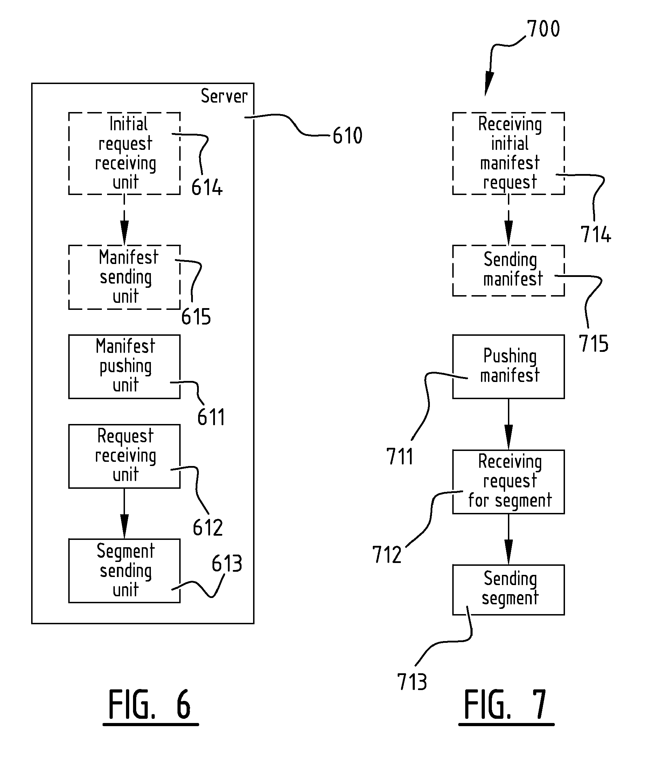

Figure 6 illustrates another aspect of the invention, where there is provided a server 610 for sending adaptive streaming video, comprising a plurality of segments, over an internet application protocol to a client. The server 610 comprises:
a manifest pushing unit 611 configured for pushing a manifest, comprising information on at least availability of at least one segment of the plurality of segments, to the client when said manifest becomes available at the server;
a request receiving unit 612 configured for receiving from the client a request for said at least one available segment; and
a segment sending unit 613 configured for sending said at least one available segment to the client.

According to an embodiment the server further comprises:
an initial request receiving unit 614 configured for receiving an initial request for a manifest from the client, for initiating adaptive streaming video transfer; and
a manifest sending unit 615 configured for sending said manifest to the client upon request of the client.

Figure 7 is a flowchart of a method 700 for sending adaptive streaming video, comprising a plurality of segments, over an internet application protocol from a server to a client. The method 700 comprises at the server side:
a step 711 of pushing a manifest, comprising information on at least availability of at least one segment of the plurality of segments, to the client when said manifest becomes available at the server;
a step 712 of receiving from the client a request for sending said at least one available segment; and
a step 713 of sending said at least one available segment to the client.

According to an embodiment the method 700 comprises at the server side:
a step 714 of receiving an initial request for a manifest from the client, to initiate adaptive streaming video transfer; and
a step 715 of sending said manifest to the client upon request of the client.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors", "modules" or "units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor", "controller" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. A system for transferring adaptive streaming video, comprising a plurality of segments, over an internet application protocol between a server and a client, said system comprising:
at the server: a manifest pushing unit configured for pushing a manifest, comprising information on at least availability of at least one segment of the plurality of segments, to the client when said manifest becomes available at the server;
at the client: a manifest receiving unit for receiving said manifest from the server;
at the client: a manifest parsing unit for parsing said manifest and determining which at least one segment is available;
at the client: a segment requesting unit configured for requesting said at least one available segment from the server;
at the server: a request receiving unit configured for receiving from the client said request for said at least one available segment;
at the server: a segment sending unit configured for sending said at least one available segment to the client;
at the client: a segment receiving unit configured for receiving said at least one available segment from the server.

2. The system according to claim 1, comprising;
at the client: a manifest requesting unit configured for requesting a manifest from the server; and
at the server: a manifest sending unit for sending said manifest to the client upon request of the client.

3. The system according to claim 1 or 2, wherein the manifest comprises information on the quality of the at least one available segment and wherein the system comprises;
at the client: a bandwidth determining unit and a segment selecting unit; and
wherein;
at the client: the manifest parsing unit is configured for parsing said manifest and determining the quality of the at least one available segment;
at the client: the bandwidth determining unit is configured for determining an available bandwidth;
at the client: the selecting unit is configured for selecting which of the at least one available segment should be requested, based on the quality of said at least one available segment and the available bandwidth;
at the client: the segment requesting unit is configured for requesting said selected segment from the server;
at the server: the segment sending unit is configured for sending said selected segment to the client;
at the client: the segment receiving unit is configured for receiving said selected segment from the server.

4. The system according to claim 3 wherein the bandwidth determining unit is configured for determining the available bandwidth by performing at least one step of the group comprising monitoring bandwidth utilization during a previous cycle, monitoring a perceived bandwidth for recently received segments and monitoring current buffer filling.

5. The system according to any one of the claims 1 to 4 wherein the internet application protocol is HTTP2.0 and the manifest pushing unit is configured for pushing a manifest to the client by performing a HTTP2.0 push.

6. The system according to any one of the claims 1 to 5 wherein the system is implemented in a content delivery network.

7. A method for transferring adaptive streaming video, comprising a plurality of segments, over an internet application protocol between a server and a client, said method comprising at least one cycle of following steps:
at the server: pushing a manifest, comprising information on at least availability of at least one segment of the plurality of segments, to the client when said manifest becomes available at the server;
at the client: receiving said manifest from the server;
at the client: parsing said manifest and determining which at least one segment is available;
at the client: requesting said at least one available segment from the server;
at the server: receiving from the client said request for said at least one available segment
at the server: sending said at least one available segment to the client;
at the client: receiving said at least one available segment from the server.

8. The method according to claim 7, wherein in an initial cycle, the step at the server of pushing a manifest to the client when said manifest becomes available at the server, is replaced by following steps:
at the client: requesting a manifest from the server; and
at the server: sending said manifest to the client.

9. The method according to claim 7 or 8, wherein the manifest comprises information on the quality of the at least one available segment and wherein the at least one cycle comprises following steps:
at the client: parsing said manifest and determining the quality of the at least one available segment;
at the client: determining an available bandwidth;
at the client: selecting which of the at least one available segment should be requested, based on the quality of said at least one available segment and the available bandwidth;
at the client: requesting said selected segment from the server;
at the server: sending said selected segment to the client;
at the client: receiving said selected segment from the server.

10. The method according to claim 9, wherein determining the available bandwidth comprises at least one step of the group comprising monitoring bandwidth utilization during a previous cycle, monitoring a perceived bandwidth for recently received segments and monitoring current buffer filling.

11. A server for sending adaptive streaming video, comprising a plurality of segments, over an internet application protocol to a client, comprising:
a manifest pushing unit configured for pushing a manifest, comprising information on at least availability of at least one segment of the plurality of segments, to the client when said manifest becomes available at the server;
a request receiving unit configured for receiving from the client a request for said at least one available segment; and
a segment sending unit configured for sending said at least one available segment to the client.

12. The server according to claim 11, further comprising:
an initial request receiving unit configured for receiving an initial request for a manifest from the client, for initiating adaptive streaming video transfer; and
a manifest sending unit configured for sending said manifest to the client upon request of the client.

13. A method for sending adaptive streaming video, comprising a plurality of segments, over an internet application protocol from a server to a client, said method comprising at the server side:
pushing a manifest, comprising information on at least availability of at least one segment of the plurality of segments, to the client when said manifest becomes available at the server;
receiving from the client a request for sending said at least one available segment; and
sending said at least one available segment to the client.

14. The method according to claim 13, comprising at the server side:
receiving an initial request for a manifest from the client, to initiate adaptive streaming video transfer; and
sending said manifest to the client upon request of the client.

15. A computer program product comprising computer-executable instructions for performing the method of any one of the claims 7 to 10, when the program is run on a computer.
